# EUROPÄISCHE PATENTSCHRIFT

(11) **EP 1 076 195 B1**
(45) Veröffentlichungstag und Bekanntmachung des Hinweises auf die Patenterteilung: **01.02.2006**
(21) Anmeldenummer: 00112839.6
(22) Anmeldetag: 17.06.2000
(51) Int. Cl.: F16K 31/06

(54) **Absperrorgan**
Shut-off device
Dispositif d'arrêt

(30) Priorität: 10.08.1999 DE 19937627
(43) Veröffentlichungstag der Anmeldung: 14.02.2001
(73) Patentinhaber: Siemens Schweiz AG, 8047 Zürich (CH)
(72) Erfinder: Hettel, Alfred, 76467 Bietigheim (DE); Obermann, Axel, 76461 Muggensturm (DE)
(74) Vertreter: Weise, Wolfgang

(56) Entgegenhaltungen:
- DE-A- 19 803 896
- DE-B- 1 136 175
- DE-U- 6 610 392
- US-A- 5 832 883

## Beschreibung

Die Erfindung bezieht sich auf ein Absperrorgan mit einem Absperrkörper, der von einem Antrieb zwischen Anschlägen bewegbar ist, wie zum Beispiel aus DE-U-6610392 bekannt.

Bei derartigen Absperrorganen, darunter Absperrventilen, die insb. elektromagnetisch antreibbar sind, entstehen beim Öffnen und Schließen oft Geräusche, die vielfach auch als "Ventil-klappern" bezeichnet werden. Obwohl die Absperrkörper, darunter Ventilteller, oftmals aus gummielastischem Material bestehen oder mit einem dämpfenden Überzug versehen sind, lassen sich derartige Geräusche oft nicht vermeiden; sie werden insb. entlang der Leitungen, die sie schließen oder öffnen, oft zu Stellen entlanggeleitet, bei denen derartige Geräusche als äußerst störend empfunden werden.

Der Erfindung liegt die Aufgabe zugrunde, mit einfachen Mitteln die Geräuschentwicklung beim Betätigen solcher Absperrorgane zu vermeiden oder mindestens wesentlich zu vermindern.

Die Erfindung ist im Anspruch 1 gekennzeichnet und in Unteransprüchen sind weitere Ausbildungen derselben beansprucht. Anhand der Figurenbeschreibung sind besonders bevorzugte Ausbildungen beschrieben.

Bei der Erfindung ist mit dem Absperrkörper eine Reibungsbremse bewegbar, welche die Bewegung des Absperrkörpers kurz vor dem Auftreffen auf den entsprechenden Anschlag etwas abbremst, so daß der Absperrkörper nur mit verminderter Kraft am Anschlag anschlägt. Die Reibungsbremse soll daher jeweils eine Reibungsstrecke weit vor dem Zeitpunkt in Funktion treten, an dem der Absperrkörper den betreffenden Anschlag erreicht. Die Funktion der Reibungsbremse besteht darin, daß sie beim Bewegen des Absperrkörpers längs der Reibungsstrecke an einer Reibungsfläche entlangreibt.

Diese Reibungsfläche kann beispielsweise vom Schaft des Absperrkörpers gebildet sein, der diesen mit dem Antrieb verbindet. Die Reibungsfläche kann auch von der Innenwand eines Gehäuses gebildet sein, in der ein Antriebskörper für den Absperrkörper entlangbewegbar ist. Der Geräuschentwicklung wird durch besondere Bemessung der Reibungskraft zwischen Reibungsbremse und Reibungsfläche, also insb. durch das Material der Reibungsbremse und die Oberflächenbeschaffenheit der Reibungsfläche bestimmt. In manchen Fällen empfiehlt es sich, die Reibungsfläche durch einen dünnen Überzug am betreffenden Aggregat zu realisieren.

Der Sperrkörper sollte mit dem Anschlag für den Absperrkörper in dessen geöffneter Stellung verbunden sein. Bei einer anderen Ausbildung der Erfindung ist der Sperrkörper mit dem Absperrkörper selbst - verbunden; dabei empfiehlt es sich, den Antriebskörper für den Absperrkörper mit Flächen zu versehen, welche als Sperrkörper wirken.

Der Reibungskörper ist in einfachster Weise als Ring ausbildbar. Je nach den konstruktiven Bedingungen kann sich aber auch ein Reibungsbremse empfehlen, die zwei Anschlagflansche insb. an deren Enden aufweist.

Als Material für die Reibungsbremse empfiehlt sich die Verwendung von thermoplastischen Homopolymerisaten, insbesondere Polyoxymethylen (POM).

Es empfiehlt sich, wenn der Antrieb einen elektromagnetisch wirksamen Anker als elektromagnetisch betätigbaren Antriebskörper aufweist. Dem Antriebskörper sollte eine Feder entgegenwirken, so daß bei fehlender Betätigung des Antriebs die Feder den Absperrkörper in die geschlossene Stellung auf beispielsweise den Ventilsitz drückt, während zum Abheben und Öffnen des Absperrkörpers die elektrische Spule des elektromagnetischen Antriebs erregt wird, so daß deren elektromagnetisches Feld den Anker bewegt und gleichzeitig den Absperrkörper aus der geschlossenen in eine geöffnete Stellung zieht. Der Umfang bzw. Hub des Abhebens des Absperrkörpers vom Ventilsitz wird durch einen anderen Anschlag begrenzt. Bei diesem Ausführungsbeispiel wird die Schließkraft des Absperrorgans durch die Feder und die Öffnungskraft durch den elektromagnetischen Antrieb erzeugt.

Anhand der Zeichnungen sind zwei Ausführungsbeispiele der Erfindung schematisch im folgenden näher erläutert. Dabei zeigen:
- Figur 1: einen schematischen Querschnitt durch ein als Absperrventil ausgebildetes Absperrorgan in der geschlossenen Stellung;
- Figur 2,3 und 4: entsprechende vereinfachte Schaubilder in anderen Stellungen bzw. Positionen des Absperrkörpers;
- Figur 5: eine der Figur 1 entsprechende schematische Darstellung einer anderen Ausbildung der Erfindung gleichfalls in der geschlossenen Stellung und
- Figur 6,7 und 8: andere Stellungen bzw. Positionen als der von Figur 5 des betreffenden Absperrkörpers.

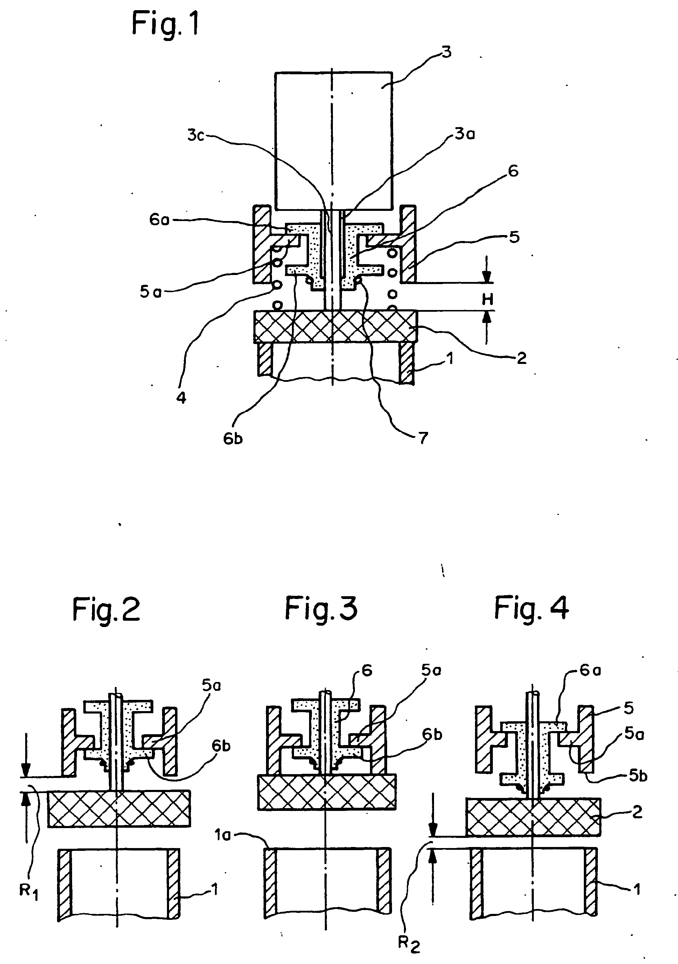

Gemäß Figur 1 wird auf den Rand einer Leitung 1 der Absperr-körper 2 mit Hilfe einer Wendelfeder 4 aufgedrückt, welche die Schließkraft erzeugt und sich auf einer ringförmigen Nabe eines Anschlagringes 5 abstützt. Die Nabe bildet auch gleichzeitig einen Sperrkörper 5a für die Reibungsbremse 6. In Figur 1 wird in der Schließposition des Absperrkörpers 2 der obere Anschlagflansch 6a der Reibungsbremse 6 an den Sperrkörper 5a angedrückt aufgrund der Schließkraft der Feder 4. Die garnrollenähnliche Reibungsbremse 6 besteht aus thermoplastischen Homopolymerisaten, insbesondere Polyoxymethylen (POM) und ist am unteren Ende mittels eines Spannringes 7 am Schaft 3c des Absperrkörpers 2 festgespannt, der den letztgenannten mit einem Anker 3 verbindet, der als Antriebskörper elektromagnetisch wirksam ist. Der Schaft 3c ist von einem Überzug umgeben, der die Reibungsfläche 3a für die innere Mantelfläche der Reibungsbremse 6 -wie nachfolgend beschrieben- bildet. Der Absperrkörper 2 aus einem gummielastischen Teil, aus z.B. Katschukmaterialien wie Nitrilkautschuk (NBR), ist um den Hub H aus der geschlossenen Stellung (Figur 1) in die voll geöffnete Stellung (Figur 3) mittels des Ankers 3 entgegen der Kraft der Feder 4 bewegbar. In der geschlossenen Stellung schlägt der Absperrkörper 2 an dem als Anschlag 5b für diesen dienenden unteren Rand des Anschlagringes 5 an.

Um dabei Geräusche zu vermeiden, tritt die Reibungsbremse 6 gemäß Figur 2 dann in Funktion, wenn der Absperrkörper 2 nur noch eine Reibungsstrecke R1 weit im Abstand vom Anschlag 5b befindet. In diesem Moment legt sich nämlich der untere Anschlagflansch 6b an die ringförmige Nabe, die als Sperrkörper 5a dient. Wäre die Reibungsbremse 5 unverschiebbar mit dem Schaft 3c verbunden, könnte der Absperrkörper 2 seine Sperrposition nicht erreichen. Um dies zu ermöglichen, drückt zwar die Kraft des Antriebskörpers 3 den Sperrkörper aus der Position von Figur 2 in die Sperrstellung von Fig. 3. Dabei reibt die Reibungsbremse 6 entlang der Reibungsfläche 3a, wodurch die Anschlagkräfte des Absperrkörpers 2 am Anschlag 5b wesentlich vermindert werden. Durch diesen auf dem letzten Teil der Bewegungsstrecke, d.h. des Hubes H, zurückzulegenden Weg des Absperrkörpers 2 dient die Antriebskraft dazu, die zusätzliche Reibungskraft der Reibungsbremse zu überwinden. Sie bremst dadurch die Öffnungsbewegungen am Ende der Bewegungsstrecke und sorgt für einen gedämpften "Aufprall" des Absperrkörpers auf dem Anschlag.

Tritt der Antrieb außer Funktion, dann drückt die Feder 4 den Absperrkörper 2 aus der Position von Figur 3 über die Position von Figur 4 wieder zurück in die geschlossene Stellung von Figur 1. Auch auf diesem Bewegungsweg entlang des Hubes H wird kurz vor Erreichen des Anschlags 1a durch den Absperrkörper 2 wiederum eine Reibungsstrecke R2 zurückgelegt, in welcher die Reibungsbremse 6 erneut, dieses Mal in umgekehrter Richtung in Funktion tritt, wenn deren oberer Anschlagflansch 6a am Sperrkörper 5a angelangt ist. Obwohl der Federkraft der Feder 4 eine durch die Bewegungsenergie des Ankers "aufgebaute" Kraft überlagert wird, stellt sich die Reibungskraft der Reibungsbremse diesen Kräften entgegen und dämpft dadurch den Aufprall auf dem Ventilsitz.

In solchen Fällen, in denen die Kraft der Feder 4 so dimensioniert ist, daß sie durch den Einfluß der Reibungskraft nicht verändert werden darf, empfiehlt es sich, die Reibungsfläche so auszubilden, daß die Reibungsbremse dort unterschiedliche Verhältnisse (bewirkt beispielsweise durch unterschiedliche Durchmesser) antrifft. Hierdurch kann der Schließvorgang in drei Phasen aufgeteilt werden, nämlich in eine erste Phase und in eine dritte Phase, in der die Reibungsbremse nicht aktiv ist, während die Reibungsbremse in einer dazwischen befindlichen Phase in Funktion tritt.

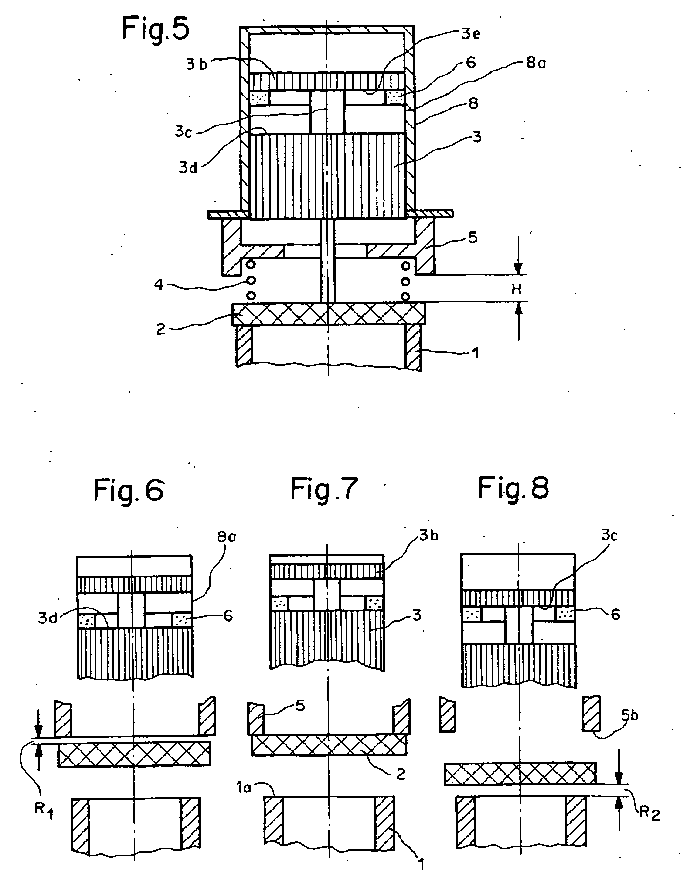

Bei der Ausbildung von Figur 5 befindet sich die ringförmige Reibungsbremse 6 im Zwischenraum zwischen dem Hauptteil des zylindrischen Antriebskörpers 3 und einem über den Schaft 3c mit diesem verbundenen gleichfalls zylinderförmigen Nebenteil 3b an dessen Stirnseite. Die nach unten weisende Fläche des Nebenteils 3b dient als Sperrkörper 3e ebenso wie die obere Stirnfläche des Hauptteils des Antriebskörpers 3 als Sperrkörper 3d für die Reibungsbremse 6 dient, wenn diese entlang der Reibungsfläche 8a aus der in Figur 5 gezeigten Position über Figur 6 in die in Figur 7 gezeigte Stellung und von dieser wieder zurück über die Position von Figur 8 in die geschlossene Stellung des Absperrkörpers von Figur 5 bewegt wird. Die Reibung bzw. Friktion erfolgt zwischen der zylindrischen Außenwand der Reibungsbremse 6 und der zylindrischen als Reibungsfläche 8a dienenden Innenwand des Gehäuses 8. Der Abstand der Sperrkörper 3d und 3e und die Dicke der ringförmigen Reibungsbremse 6 bestimmen den Zeitpunkt, in dem diese ihre die Schließ- oder Öffnungsbewegung hemmende bzw. bremsende Funktion beginnt.

## Patentansprüche

1. Absperrorgan mit einem Absperrkörper (2), der von einem Antrieb zwischen Anschlägen (1a, 5b) bewegbar ist, **dadurch gekennzeichnet, daß** eine Reibungsbremse (6) mit dem Absperrkörper (2) zwischen Sperrkörpern (5a; 3d, 3e) bewegbar ist, an denen die Reibungsbremse (6) jeweils eine Reibungsstrecke (R1, R2) weit vor dem Zeitpunkt anlangt, an dem der Absperrkörper (2) seinen betreffenden Anschlag (1a, 5b) erreicht, und daß die Reibungsbremse (6) beim Bewegen des Absperrkörpers (2) entlang der Reibungsstrecke (R1, R2) an einer Reibungsfläche (3a; 8a) entlangreibt.

2. Absperrorgan nach Anspruch 1, **dadurch gekennzeichnet, daß** der Sperrkörper (5a) mit dem Anschlag (5b) für den Absperrkörper (2) in dessen geöffneter Stellung verbunden ist.

3. Absperrorgan nach Anspruch 1, **dadurch gekennzeichnet, daß** der Sperrkörper (3, 3b) mit dem Absperrkörper (2) verbunden ist.

4. Absperrorgan nach einem der vorhergehenden Ansprüche, **dadurch gekennzeichnet, daß** die Reibungsfläche (3a) vom Schaft (3c) des Absperrkörpers (2) bzw. von einem den Schaft (3c) umgebenden Überzug gebildet ist, der diesen mit dem Antrieb verbindet.

5. Absperrorgan nach einem der vorhergehenden Ansprüche, **dadurch gekennzeichnet, daß** die Reibungsfläche (8a) von der Innenwand eines Gehäuses (8) gebildet ist, in der ein Antriebskörper (3) des Antriebs entlangbewegbar ist.

6. Absperrorgan nach einem der vorhergehenden Ansprüche, **dadurch gekennzeichnet, daß** die Reibungsbremse (6) als Ring ausgebildet ist.

7. Absperrorgan nach einem der vorhergehenden Ansprüche, **dadurch gekennzeichnet, daß** die Reibungsbremse (6) zwei Anschlagflansche (6a, 6b) aufweist.

8. Absperrorgan nach einem der vorhergehenden Ansprüche, **dadurch gekennzeichnet, daß** die Reibungsbremse (3) aus thermoplastischen Homopolymerisaten, insbesondere Polyoxymethylen (POM) besteht.

9. Absperrorgan nach einem der vorhergehenden Ansprüche, **dadurch gekennzeichnet, daß** der Antrieb einen elektromagnetisch wirksamen Anker als Antriebskörper (3) aufweist.

10. Absperrorgan nach einem der vorhergehenden Ansprüche, **dadurch gekennzeichnet, daß** dem Antriebskörper (3) eine Feder (4) entgegenwirkt.

11. Absperrorgan nach einem der vorhergehenden Ansprüche, **dadurch gekennzeichnet, daß** der Absperrkörper (2) als gummielastischer Ventilteller eines Absperrventils ausgebildet ist.

## Claims

1. Shut-off device having a shut-off member (2), which can be moved by a actuator between stops (1a, 5b), **characterized in that** a friction brake (6) with the shut-off member (2) can be moved between closing members (5a; 3d, 3e), on each of which the friction brake (6) arrives at a friction length (R1, R2) long before the point at which the shut-off member (2) reaches its relevant stop (1a, 5b), and that the friction brake (6) rubs along a friction surface (3a; 8a) as the shut-off member (2) moves along the frictional length (R1, R2).

2. Shut-off device according to Claim 1, **characterized in that** the closing member (5a) is connected to the stop (5b) for the shut-off member (2) in its opened position.

3. Shut-off device according to Claim 1, **characterized in that** the closing member (3, 3b) is connected to the shut-off member (2).

4. Shut-off device according to any one of the preceding Claims, **characterized in that** the friction surface (3a) is formed by the shaft (3c) of the shut-off member (2), or by a coating which covers the shaft (3c), which connects this to the actuator.

5. Shut-off device according to any one of the preceding Claims, **characterized in that** the friction surface (8a) is formed by the inner wall of a housing (8), in which an drive member (3) of the actuator can be moved along.

6. Shut-off device according to any one of the preceding Claims, **characterized in that** the friction brake (6) is of annular design.

7. Shut-off device according to any one of the preceding Claims, **characterized in that** the friction brake (6) has two stop flanges (6a, 6b).

8. Shut-off device according to any one of the preceding Claims, **characterized in that** the friction brake (3) is composed of thermoplastic homopolymers, in particular polyoxymethylene (POM).

9. Shut-off device according to any one of the preceding Claims, **characterized in that** the actuator has an electromagnetically operating armature as drive member (3).

10. Shut-off device according to any one of the preceding Claims, **characterized in that** a spring (4) acts in opposition to the drive member (3).

11. Shut-off device according to any one of the preceding Claims, **characterized in that** the shut-off member (2) takes the form of a rubber elastic valve disc of a shut-off valve.

## Revendications

1. Dispositif d'arrêt avec un corps d'arrêt (2) déplaçable entre des butées (1a, 5b) par un entraînement, **caractérisé en ce qu'**un frein à friction (6) est déplaçable avec le corps d'arrêt (2) entre des corps de blocage (5a, 3d, 3e), sur lesquels le frein à friction (6), arrive respectivement à une distance d'un intervalle de friction (R1, R2) avant le moment où le corps d'arrêt (2) atteint sa butée concernée (1a, 5b), et **en ce que** le frein à friction (6) frotte sur une surface de friction (3a, 8a) lors du déplacement du corps d'arrêt (2) le long de l'intervalle de friction (R1, R2).

2. Dispositif d'arrêt selon la revendication 1, **caractérisé en ce que** le corps de blocage (5a) est relié à la butée (5b) pour le corps d'arrêt (2) dans la position ouverte de ce dernier.

3. Dispositif d'arrêt selon la revendication 1, **caractérisé en ce que** le corps de blocage (3, 3b) est relié au corps d'arrêt (2).

4. Dispositif d'arrêt selon l'une quelconque des revendications précédentes, **caractérisé en ce que** la surface de friction (3a) est formée par la tige (3c) du corps d'arrêt (2) resp. par un revêtement entourant la tige (3c), qui relie celui-ci à l'entraînement.

5. Dispositif d'arrêt selon l'une quelconque des revendications précédentes, **caractérisé en ce que** la surface de friction (8a) est formée par la paroi intérieure d'un boîtier (8), dans et le long de laquelle paroi intérieure un corps d'entraînement (3) de l'entraînement est déplaçable.

6. Dispositif d'arrêt selon l'une quelconque des revendications précédentes, **caractérisé en ce que** le frein à friction (6) est formé comme un anneau.

7. Dispositif d'arrêt selon l'une quelconque des revendications précédentes, **caractérisé en ce que** le frein à friction (6) présente deux brides de butée (6a, 6b).

8. Dispositif d'arrêt selon l'une quelconque des revendications précédentes, **caractérisé en ce que** le frein à friction (3) est composé d'homopolymères thermoplastiques, notamment de polyoxyméthylènes (POM).

9. Dispositif d'arrêt selon l'une quelconque des revendications précédentes, **caractérisé en ce que** l'entraînement présente un induit fonctionnant électromagnétiquement comme corps d'entraînement (3).

10. Dispositif d'arrêt selon l'une quelconque des revendications précédentes, **caractérisé en ce qu'**un ressort (4) agit à l'encontre du corps d'entraînement (3).

11. Dispositif d'arrêt selon l'une quelconque des revendications précédentes, **caractérisé en ce que** le corps d'arrêt (2) est formé comme un corps de vanne élastique d'une vanne d'arrêt.
